# EUROPEAN PATENT APPLICATION

(11) **EP 2 804 146 A1**
(43) Date of publication of application: **19.11.2014**
(21) Application number: 14168552.9
(22) Date of filing: 15.05.2014
(51) Int. Cl.: G06T 5/40, G06T 5/00

(54) **Image processing method, image processor, imager, and computer program**

(30) Priority: 15.05.2013 JP 2013103010
(71) Applicant: JEOL Ltd., Akishima, Tokyo 196 (JP)
(72) Inventor: Hisaki, Taku, Akishima, Tokyo 196-8558 (JP)
(74) Representative: Boult Wade Tennant

(57) **Abstract**

A method of image processing is offered which can control the degree of application of histogram equalization. The method involves: creating a brightness histogram indicating the frequency values of brightness levels of image data having brightness information (S12); obtaining a parameter value (S 14); raising the frequency values of the brightness levels of the brightness histogram to an exponential power of the parameter value (S16); generating a tone curve, based on the frequency values raised to the exponential power of the parameter value (S 18); and correcting the image data using the tone curve to thereby produce output image data (S20).

## Description

### BACKGROUND OF THE INVENTION

### 1. Field of the Invention

The present invention relates to an image processing method, image processor, imager, and computer program.

### 2. Description of the Related Art

Generally, histogram equalization is to readjust the brightness of each pixel such that a brightness histogram of an input image is made uniform. A histogram equalization process is carried out by applying a cumulative curve of the histogram of the input image to the input image while regarding the cumulative curve as a tone curve.

However, a histogram equalization process may increase the noise. As a technique of avoiding this undesirable phenomenon, a contrast limited histogram equalization (CLHE) has been proposed that is a histogram equalization technique to which a contrast limited technique is added.

In CLHE, when a cumulative curve of a histogram of an input image is created, this histogram is prevented from exceeding a given threshold value. As a result, the tilt of the cumulative curve, i.e., the tilt of a tone curve, is limited to below a certain value according to the value of the threshold value. Consequently, CLHE has the feature that minute brightness differences in the input image are not overemphasized. In CLHE, either the threshold value or the maximum tilt of the cumulative curve is a unique parameter.

Patent document 1 discloses a technique for avoiding generation of artifacts by the use of a histogram equalization process which results in a more natural looking post-processed image.

### Citation List

Patent Documents
Patent document 1: JP-A-2003-281527

Although the original histogram equalization is an ideal technique in that it maximizes the amount of information (entropy) of an image, the user cannot adjust the degree of application of histogram equalization. That is, even in a histogram equalization process where noise is overemphasized according to an input image, any operation for adjusting the degree of application cannot be achieved.

### SUMMARY OF THE INVENTION

In view of the foregoing problem, the present invention has been made. According to some aspects of the invention, it is possible to offer an image processing method, image processor, imager, and computer program capable of controlling the degree of application of histogram equalization.
(1) A method of image processing associated with the present invention includes the steps of: creating a brightness histogram representing frequency values of brightness levels of image data having brightness information; obtaining a parameter value; raising the frequency values of the brightness levels of the brightness histogram to an exponential power of the parameter value; creating a tone curve, based on the exponentially raised frequency values; and correcting the image data using the tone curve, thus producing output image data.
   According to this method of image processing, the parameter value acts as a parameter that controls the degree of application of histogram equalization and, therefore, the degree of application of histogram equalization can be controlled.
   The index to which the frequency values of the brightness levels of the brightness histogram are raised in power is used as a parameter value. This makes it possible to make constant the degree of variation of the output image perceived by the user in response to a given amount of variation of the parameter value. Consequently, a parameter value for obtaining a desired image can be set easily. Hence, a desired image can be obtained easily.
(2) In one feature of this method of image processing, the parameter value may be a value between 0 and 1, inclusively.
   According to this method of image processing, the degree of application of histogram equalization can be controlled.
(3) In another feature of this method of image processing, during the step of creating a tone curve, said frequency values raised to the exponential power of the parameter value are accumulated to create a cumulative curve, a minimum value of the cumulative curve is made to correspond to a minimum value of brightness, and a maximum value of the cumulative curve is made to correspond to a maximum value of brightness to thereby create the tone curve.
   According to this method of image processing, the degree of application of histogram equalization can be controlled.
(4) An image processor associated with the present invention has: a brightness histogram generating portion for creating a brightness histogram representing frequency values of brightness levels of image data having brightness information; a parameter value acquisition portion for obtaining a parameter value; a frequency value raising portion for raising the frequency values of the brightness levels of the brightness histogram to an exponential power of the parameter value; a tone curve generating portion for generating a tone curve, based on the exponentially raised frequency values; and an image correction portion for correcting the image data using the tone curve to thereby produce output image data.
   In this image processor, the parameter value acts as a parameter that controls the degree of application of histogram equalization and so the degree of application of histogram equalization can be controlled.
   Furthermore, it is possible to make constant the degree of variation of the output image perceived by the user in response to a given amount of variation of the parameter value by using an index as a parameter value such that the frequency values of the brightness levels of the histogram are raised to an exponential power of the index. In consequence, the parameter value for obtaining a desired image can be set easily, and a desired image can be derived easily.
(5) In one feature of this image processor, the parameter value may be a value between 0 and 1, inclusively.
   With this image processor, the degree of application of histogram equalization can be controlled.
(6) In another feature of this image processor, the tone curve generating portion may generate the tone curve by accumulating the frequency values raised to the exponential power of the parameter value to create a cumulative curve, making a minimum value of the cumulative value correspond to a minimum value of brightness, and making a maximum value of the cumulative curve correspond to a maximum value of brightness.
   With this image processor, the degree of application of histogram equalization can be controlled.
(7) An imager associated with the present invention has: an image pickup portion for imaging an object of interest to obtain image data; a brightness histogram generating portion for creating a brightness histogram representing frequency values of brightness levels of the image data; a parameter value acquisition portion for obtaining a parameter value; a frequency value raising portion for raising the frequency values of the brightness levels of the brightness histogram to an exponential power of the parameter value; a tone curve generating portion for generating a tone curve, based on the exponentially raised frequency values; and an image correction portion for correcting the image data using the tone curve to thereby produce output image data.
   With this imager, the parameter value functions as a parameter that controls the degree of application of histogram equalization. Therefore, the degree of application of histogram equalization can be controlled.
   The index to which the frequency values of the brightness levels of the brightness histogram are raised in power is used as a parameter value. This makes it possible to make constant the degree of variation of the output image perceived by the user in response to a given amount of variation of the parameter value. Consequently, it is easy to set the parameter value for obtaining a desired image. Hence, a desired image can be obtained easily.
(8) In one feature of this imager, the parameter value may be a value between 0 and 1, inclusively.
   With this imager, the degree of application of histogram equalization can be controlled.
(9) In another feature of this imager, the tone curve generating portion may generate the tone curve by accumulating the frequency values raised to the exponential power of the parameter value to create a cumulative curve, making a minimum value of the cumulative curve correspond to a minimum value of brightness, and making a maximum value of the cumulative curve correspond to a maximum value of brightness.
   With this imager, the degree of application of histogram equalization can be controlled.
(10) A computer program associated with the present invention instructs a computer to operate as: a brightness histogram generating portion for creating a brightness histogram representing frequency values of brightness levels of image data having brightness information; a parameter value acquisition portion for obtaining a parameter value; a frequency value raising portion for raising the frequency values of the brightness levels of the brightness histogram to an exponential power of the parameter value; a tone curve generating portion for generating a tone curve, based on the exponentially raised frequency values; and an image correction portion for correcting the image data using the tone curve to thereby produce output image data.
   With this computer program, the parameter value acts as a parameter that controls the degree of application of histogram equalization and so the degree of application of histogram equalization can be controlled.
   The index to which the frequency values of the brightness levels of the histogram are raised in power is used as a parameter value. This makes it possible to make constant the degree of variation of the output image perceived by the user in response to a given amount of variation of the parameter value. Consequently, it is easy to set the parameter value for obtaining a desired image. Hence, a desired image can be obtained easily.
(11) In one feature of this computer program, the parameter value may be a value between 0 and 1, inclusively.
   With this computer program, the degree of application of histogram equalization can be controlled.
(12) In another feature of this computer program, the tone curve generating portion may generate the tone curve by accumulating the frequency values raised to the exponential power of the parameter value to create a cumulative curve, making a minimum value of the cumulative curve correspond to a minimum value of brightness, and making a maximum value of the cumulative curve correspond to a maximum value of brightness.

With this computer program, the degree of application of histogram equalization can be controlled.

### BRIEF DESCRIPTION OF THE DRAWINGS

FIG. 1 is a block diagram of an imager according to one embodiment of the present invention.
FIG. 2 shows one example of brightness histogram created by a brightness histogram generating portion included in the imager shown in FIG. 1.
FIG. 3 shows one example of user interface used to set a parameter value.
FIG. 4 shows another example of user interface used to set a parameter value.
FIG. 5 shows a histogram representing the frequency values of brightness levels raised to an exponential power of the parameter value by a frequency value raising portion.
FIG. 6 is a graph showing one example of cumulative curve generated by a tone curve generating portion.
FIG. 7 is a graph showing one example of tone curve generated by the tone curve generating portion.
FIG. 8 is a flowchart illustrating one example of image correcting subroutine performed by an image processor according to one embodiment of the present invention.
FIG. 9 shows examples of results of image processing performed by the subroutine illustrated in FIG. 8.

### DESCRIPTION OF THE PREFERRED EMBODIMENTS

The preferred embodiments of the present invention are hereinafter described in detail with reference with the drawings. It is to be understood that the embodiments described below do not unduly restrict the content of the present invention set forth in the appended claims and that configurations described below are not always essential constituent components of the invention.

### 1. Imager

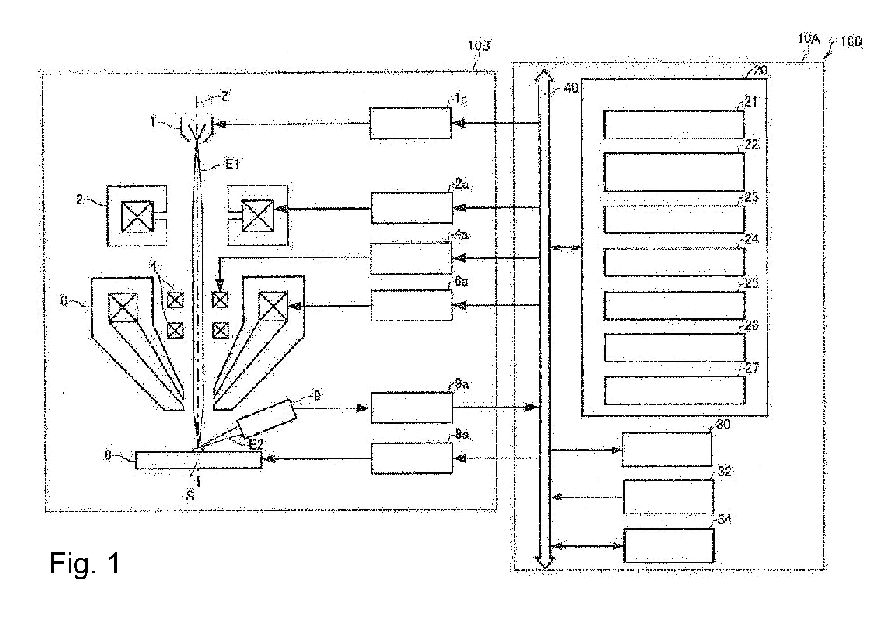

An imager associated with one embodiment of the present invention is first described with reference to FIG. 1, which indicates the configuration of the imager, generally indicated by reference numeral 100. In the present embodiment, the imager is a scanning electron microscope (SEM).

As shown in FIG. 1, the imager 100 is configured including an image processor associated with the present invention. In this case, an image processor 10A is used as the image processor associated with the present invention.

As shown also in FIG. 1, the imager 100 is configured also including an image pickup portion 10B.

The image pickup portion 10B acquires image data by imaging an object of interest. In the illustrated example, the image pickup portion 10B obtains image data by scanning a sample S with an electron beam E1 and detecting electrons E2 released from the sample S as a result of scattering of the electrons of the electron beam E1 within the sample S. The image pickup portion 10B is configured including an electron beam source 1, condenser lenses 2, a scanning deflector 4, an objective lens 6, a sample stage 8, and a detection portion 9 as shown in FIG. 1.

The electron beam source 1 emits the electron beam (primary electron beam) E1. For example, the electron beam source 1 is a well-known electron gun, and emits the electron beam E1 by accelerating electrons released from a cathode by means of an anode. No restrictions are imposed on the electron gun used as the electron beam source 1. For instance, a thermionic electron gun, a thermal field emission electron gun, a cold field emission electron gun, or the like can be used as the electron beam source 1. An accelerating voltage is applied to the electron beam source 1 from a driver portion 1a to accelerate electrons released from the cathode. The electron beam E1 released from the electron beam source 1 travels along the optical axis Z of an optical system constituting the image pickup portion 10B.

The condenser lenses 2 are disposed behind (downstream along the electron beam E1) the electron beam source 1. The lenses 2 are used to focus the electron beam E1.

The scanning deflector 4 including scan coils is arranged behind the condenser lenses 2. The scanning deflector 4 is made of electromagnetic coils used such that the electron beam E1 focused by the condenser lenses 2 and objective lens 6 is scanned over the sample S. In the illustrated example, the scanning deflector 4 is made of two stages of deflecting coils. Alternatively, the deflector may be made of more than two stages of deflecting coils. The scanning deflector 4 can scan the electron beam E1 over the sample S by deflecting the electron beam E1, based on a scan signal (control signal) generated by a control portion 27.

The objective lens 6 is disposed behind the scanning deflector 4. The objective lens 6 focuses the electron beam beam E1 and directs it at the sample S.

The sample stage 8 can hold the sample S thereon and move it. The sample stage 8 can horizontally move, vertically move, rotate, and tilt the sample S, for example.

The electron beam source 1, condenser lenses 2, scanning deflector 4, objective lens 6, and sample stage 8 are controllably energized by drivers 1a, 2a, 4a, 6a, and 8a, respectively. These drivers 1a, 2a, 4a, 6a, and 8a are connected with a bus line 40, and are supplied with driver signals from the control portion 27 via the bus line 40. The drivers 1a, 2a, 4a, 6a, and 8a drive the electron beam source 1, condenser lenses 2, scanning deflector 4, objective lens 6, and sample stage 8, based on the supplied driver signals.

The detection portion 9 detects the electrons E2 (such as secondary electrons or backscattered electrons) released from the sample S in response to irradiation of the sample S with the electron beam E1. The detection portion 9 is configured, for example, including a scintillator and a photomultiplier (none of which are shown). An intensity signal delivered from the detection portion 9 and representing detected secondary electrons or backscattered electrons is sent to the bus line 40 via an A/D converter 9a. The intensity signal is stored as image data synchronized with the scanning signal for the electron beam E1 in a storage portion 34. A scanned electron image of the sample S is created from this image data. In the illustrated example, the detection portion 9 is disposed between the objective lens 6 and the sample S on the sample stage 8. No restrictions are placed on the arrangement of the detection portion 9. For example, the detection portion 9 may be placed above the objective lens 6.

The image processor 10A is configured including a processing portion 20, a display portion 30, a manual control unit 32, and the storage portion 34. The image processor 10A can be realized, for example, by a personal computer (PC).

The display portion 30 displays the results of processing performed by the processing portion 20 as literal information, graphic information, or other kind of information, based on a display signal entered from the processing portion 20 via the bus line 40. For example, the display portion 30 displays an input image obtained by an image acquisition portion 21 and an output image corrected by an image correcting portion 26. For instance, the display portion 30 is made of a CRT, LCD, or touch panel display.

The manual control unit 32 obtains a control signal responsive to a user's manipulation and sends the signal to the processing portion 20 via the bus line 40. The manual control unit 32 is made, for example, of buttons, keys, a touch panel display, or a microphone.

The storage portion 34 stores programs and data for causing the processing portion 20 to perform various kinds of computational processing and control operations. Furthermore, the storage portion 34 is used by the processing portion 20 as a working area to temporarily store the control signal entered from the manual control unit 32 and the results of calculations executed by the processing portion 20 in accordance with various programs. The storage portion 34 is connected with the bus line 40.

The processing portion 20 as made of a CPU performs various kinds of computational processing in accordance with programs stored in the storage portion 34. By executing the programs stored in the storage portion 34, the processing portion 20 acts as the image acquisition portion 21, a brightness histogram generating portion 22, a parameter value acquisition portion 23, a frequency value raising portion 24, a tone curve generating portion 25, the image correcting portion 26, and the control portion 27 as described later. At least some of the processing portion 20 may be implemented in hardware or dedicated hardware circuitry.

The image acquisition portion 21 obtains image data of the input image to be corrected. In the illustrated example, the image acquisition portion 21 obtains image data, which is produced by synchronizing the output signal from the detection portion 9 with the scanning signal, from the storage portion 34. The image data has information about the brightness of each pixel constituting an image. The image acquisition portion 21 may generate a display signal from the image data and display the input image on the display portion 30.

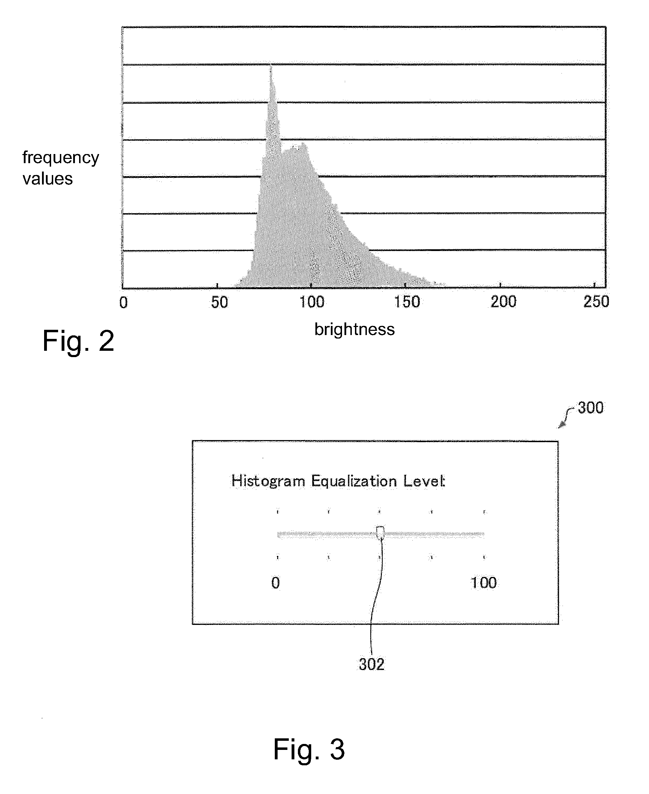

The brightness histogram generating portion 22 creates a brightness histogram representing the frequency values of the brightness levels of the image data having the brightness information. FIG. 2 shows one example of the brightness histogram created by the brightness histogram generating portion 22. As shown in FIG. 2, brightness is plotted on the horizontal axis of the brightness histogram. Frequency values of the levels of brightness are plotted on the vertical axis. In the illustrated example, brightness is represented in terms of 256 levels, from level 0 to level 255. A brightness histogram is a graph showing a distribution of brightness levels across an image. The brightness histogram generating portion 22 calculates the frequency of each brightness level from the image data and creates a brightness histogram.

The parameter value acquisition portion 23 obtains a parameter value q, which is a numeral value determining the degree of application of histogram equalization. More specifically, the parameter value q is an index to which the frequency of each brightness level is raised in power by the frequency value raising portion 24 described later. The parameter value q is between 0 and 1, inclusively (0 ≤ q ≤ 1). As the parameter value q is increased, the degree of application of histogram equalization increases. The histogram equalization referred to herein is processing for readjusting the brightness levels of the individual pixels such that the brightness histogram of the input image is made uniform. As the degree of application of histogram equalization is increased, the amount of information (entropy) of the image increases. That is, it can also be said that the parameter value q is a parameter that controls the amount of information (entropy) of the image.

The parameter value acquisition portion 23 obtains information about the set parameter value q, which is set, for example, by a user. FIG. 3 illustrates one example of a user interface, 300, for setting the parameter value. The user interface 300 of FIG. 3 is displayed, for example, on the display portion 30. On the user interface 300, the parameter q is set by a user, for example, by sliding a knob 302 to specify a value. That is, the user interface 300 is a slider control. "0" shown in FIG. 3 indicates that the parameter value q is "0". "100" shown in FIG. 3 indicates that the parameter value q is "1".

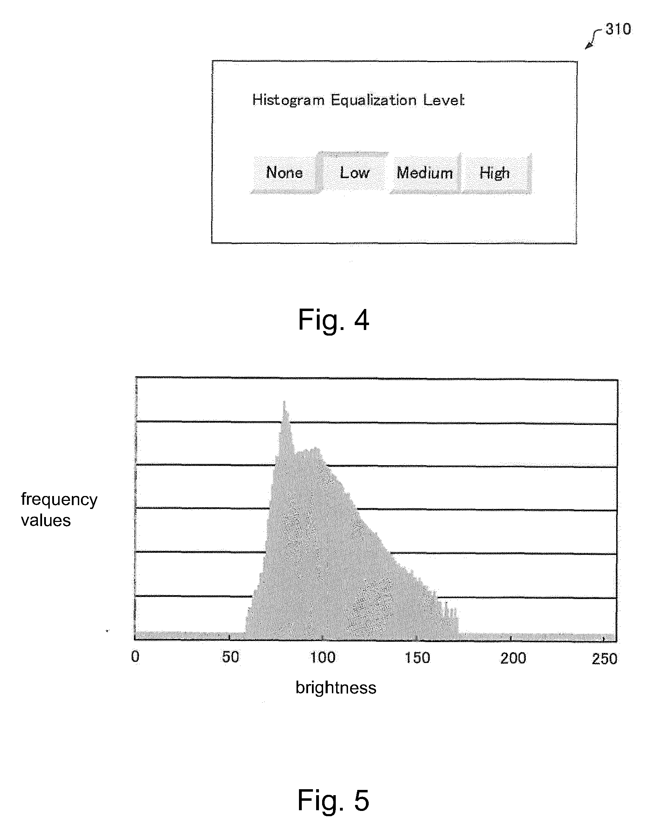

FIG. 4 shows one example of a user interface 310 used to set the parameter value. The user interface 310 shown in FIG. 4 is displayed, for example, on the display portion 30. On the user interface 310, the parameter value q is set by the user by depressing the button shown in FIG. 4. That is, the user interface 310 is a button control. For example, if the "None" button shown in FIG. 4 is depressed, the parameter value q is set to 0. If the "Low" button is depressed, the parameter value q is set to 0.2. If the "Medium" button is depressed, the parameter value q is set to 0.6. If the "High" button is depressed, the parameter value q is set to 1. The user interfaces 300 and 310 shown in FIGS. 3 and 4 operate, for example, as the manual control unit 32.

The parameter value q may be previously stored in the storage portion 34. In this case, the parameter value q is set to a preset value.

The frequency value raising portion 24 raises the frequency of each brightness level of the brightness histogram to an exponential power of the parameter value q. Let Ni be the frequency value of a brightness level i (i = 0, 1, 2, ... , 255) of the brightness histogram. The frequency value raising portion 24 performs a calculation given by Ni' = Ni^{q}, where Ni' is the frequency value of each brightness level raised to an exponential power of the parameter value q.

Before raising the frequency value Ni of each brightness level of the brightness histogram to an exponential power of the parameter value q, the frequency value raising portion 24 may add a sufficiently small value within a value range capable of being processed by the processing portion 20 to every frequency value Ni of brightness levels of the brightness histogram, for the following reasons. If there is a brightness level giving a frequency value Ni of 0, a calculation of raising 0 to an exponential power of 0 ("0⁰") should be avoided. This calculation is not mathematically defined. If this calculation is performed by computers, different behaviors would arise according to different platforms. Another reason is that when the parameter value q is 0, a linear tone curve should be generated. The frequency value raising portion 24 is not always required to perform this operation for adding a small value to the frequency values Ni of the brightness levels.

FIG. 5 shows one example of histogram indicating the frequency values Ni' of brightness levels raised to an exponential power of the parameter value q by the frequency value raising portion 24. In FIG. 5, q = 0.5. In the histogram of FIG. 5, the brightness values Ni' of brightness levels have been obtained by adding a value of 0.1 to all the frequency values Ni of the brightness levels and raising the resulting sums to an exponential power of the parameter value q.

The tone curve generating portion 25 creates a tone curve, based on the frequency values Ni' raised to an exponential power of the parameter value q.

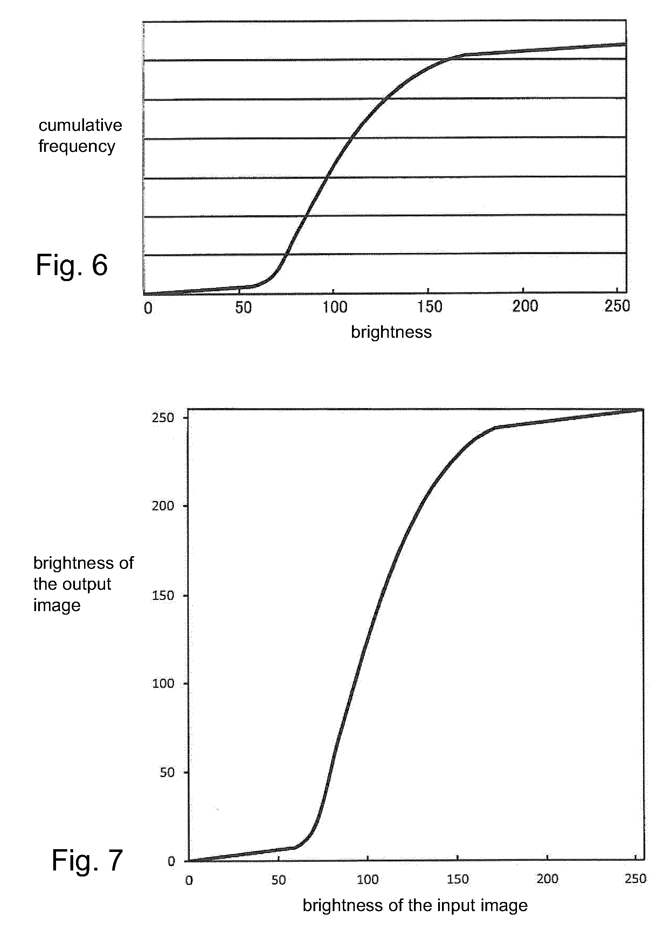

In particular, the tone curve generating portion 25 first creates a cumulative curve (a cumulative distribution function) by accumulating the frequency values Ni' raised to an exponential power of the parameter value q. FIG. 6 is a graph showing one example of cumulative curve created by the tone curve generating portion 25. In the graph of FIG. 6, brightness is plotted on the horizontal axis. Cumulative frequency is plotted on the vertical axis. The cumulative frequency is obtained at each specific brightness level of a brightness histogram by totalizing frequency values smaller than this specific brightness level. For example, the tone curve generating portion 25 accumulates the frequency values Ni' of individual brightness levels of the histogram shown in FIG. 5, creates an accumulative histogram, and creates an accumulative curve.

Then, the tone curve generating portion 25 makes a minimum value of the cumulative curve correspond to a minimum value of brightness, makes a maximum value of the cumulative curve correspond to a maximum value of brightness, and creates a tone curve. This process is referred to as scaling. FIG. 7 is a graph showing one example of tone curve created by the tone curve generating portion 25. In the graph of FIG. 7, the input brightness of the input image is plotted on the horizontal axis. The output brightness of the output image is plotted on the vertical axis. In FIG. 7, the brightness of the input image and the brightness of the output image are represented in terms of 256 levels, from level 0 to level 255. The tone curve is defined as a function of transforming the brightness values of the input image to the brightness values of the output image.

The image correcting portion 26 produces the output image data by correcting the input image data using the tone curve created by the tone curve generating portion 25. In particular, the image correcting portion 26 transforms the brightness level of each pixel of the input image into a brightness level of an output image by applying the tone curve. Thus, the output image data is obtained.

The image correcting portion 26 may generate a display signal from the output image data and display a corrected image (scanned electron image) on the display portion 30.

The control portion 27 controls the electron beam source 1, condenser lenses 2, scanning deflector 4, objective lens 6, and sample stage 8. For this purpose, the control portion 27 generates and outputs control signals. These control signals are applied to the electron beam source 1, condenser lenses 2, scanning deflector 4, objective lens 6, and sample stage 8 via their respective drivers 1a, 2a, 4a, 6a, and 8a.

### 2. Image Correction

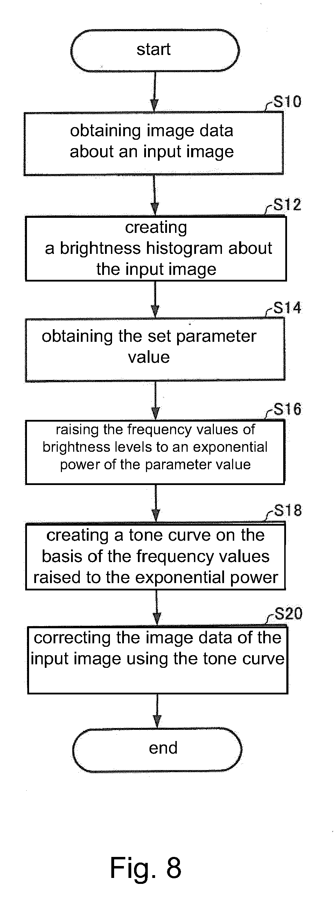

One example of image correction process (image processing method) performed by the image processor 10A associated with the present embodiment is next described by referring to FIG. 8, which is a flowchart illustrating one example of subroutine performed by the image processor 10A to carry out the image correction process.

First, the image acquisition portion 21 obtains image data about an input image (S10). In particular, the image acquisition portion 21 accepts an electron microscope image taken by the image pickup portion 10B as an input image and obtains image data of this electron microscope image.

Then, the brightness histogram generating portion 22 creates a brightness histogram (see FIG. 2) representing the frequency values of brightness levels of the image data of the input image (S12).

Then, if the parameter value q is set by the user, the parameter value acquisition portion 23 obtains information about the set parameter value q (S 14). Alternatively, the parameter value acquisition portion 23 may obtain the previously stored parameter value q from the storage portion 34.

The frequency value raising portion 24 then raises the frequency values Ni of brightness levels of the brightness histogram of the input image to an exponential power of the parameter value q (S16). In particular, the frequency value raising portion 24 first adds a sufficiently small value within a value range capable of being processed by the processing portion 20 to all the frequency values Ni of the brightness levels of the brightness histogram. Then, the frequency value raising portion 24 raises the resulting frequency values of the brightness levels to an exponential power of the parameter value q (see FIG. 5).

Then, the tone curve generating portion 25 creates a tone curve, based on the frequency values Ni' of the brightness levels raised to the exponential power of the parameter value q (i.e., based on the brightness histogram shown in FIG. 5) (S18). In particular, the tone curve generating portion 25 creates a tone curve (see FIG. 7) by accumulating the frequency values Ni' of brightness levels raised to the exponential power of the parameter value q to create a cumulative curve (see FIG. 6), making a minimum value of the cumulative curve correspond to a minimum value of brightness, and making a maximum value of the cumulative curve correspond to a maximum value of brightness.

Then, the image correcting portion 26 corrects the image data of the input image using the tone curve created by the tone curve generating portion 25 (S20). Consequently, an output image is created. The image correcting portion 26 creates a display signal, based on the created output image, and displays the output image on the display portion 30. The processing portion 20 ends the image correcting subroutine.

### 3. Example

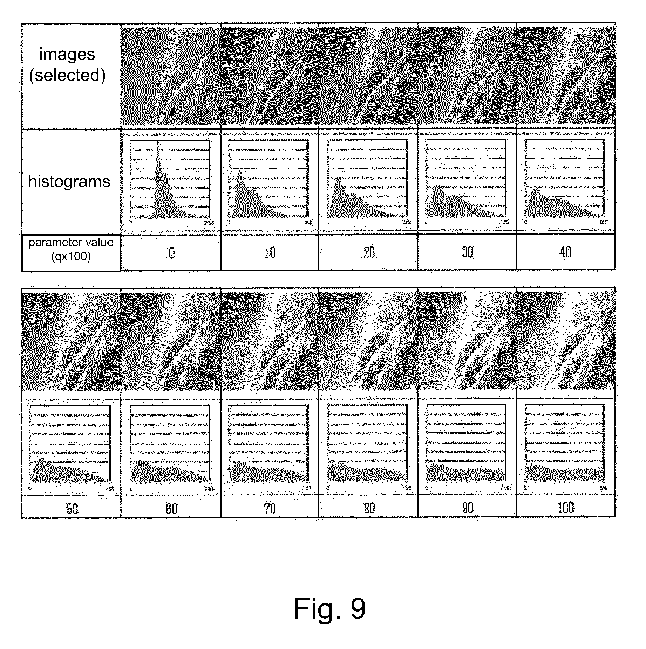

An example of the present embodiment is next described by referring to FIG. 9, which shows one example of result obtained by performing an image correction process in accordance with the present embodiment.

FIG. 9 shows output images obtained by correcting input images by the image correction process associated with the present embodiment under the condition where scanned electron images (SEM images) are used as the input images. The histograms shown in FIG. 9 correspond to the output images. A parameter value Q shown in FIG. 9 is derived by multiplying the parameter value q used to obtain the output images by a factor of 100. That is, the images shown in FIG. 9 are different in degree of application of histogram equalization.

The output image having a parameter value Q of 0 (i.e., q = 0) as shown in FIG. 9 is the same as the input image, for the following reason. Where the parameter value Q is 0 (i.e., q = 0), Ni' = Ni^{q}= Ni⁰ = 1. Therefore, the tone curve is given by a function that is represented as "output brightness = input brightness". It can be said that the output image having the parameter value Q of 0 (i.e., q = 0) is an image having the least degree of application of histogram equalization.

The output image having the parameter value of Q of "100" (i.e., q = 1) as shown in FIG. 9 is the same as an image obtained by generating a cumulative curve without exponentially raising the frequency values Ni of brightness levels and creating a tone curve because when the parameter value Q is "100" (q = 1), Ni' = Ni^{q} = Ni¹ = Ni. It can be said that the output image having the parameter value Q of "100" (q = 1) has the greatest degree of application of histogram equalization.

In this way, it can be seen from the results of FIG. 9 that as the parameter value Q is increased (i.e., as q is increased), the degree of application of histogram equalization increases. This indicates that as the parameter value Q is increased (i.e., as q is increased), the amount of information (entropy) of the image increases. In this way, in the present embodiment, by setting the parameter value q, a desired image can be obtained by controlling the degree of application of histogram equalization.

Furthermore, in the present embodiment, the index (parameter value q) to which the frequency values Ni of brightness levels are exponentially raised is used as a parameter of the degree of application of histogram equalization. The psychological amount of sensation is in proportion not to the stimulus intensity but to its logarithm (Fechner's law). Accordingly, by causing the index to which the frequency values Ni of brightness levels are exponentially raised to be used as a parameter value, it is possible to make constant the degree of variation of the output image perceived by the user in response to a given amount of variation of the parameter value q. In particular, in FIG. 9, when the parameter value Q is varied by "10" (q is varied by 0.1), the degree of variation of the output image perceived by the user is constant. That is, the degree of variation of the output image perceived by the user in going from one output image shown in FIG. 9 to adjacent one is constant. Consequently, the user can easily set the parameter value q in deriving a desired image. Hence, a desired image can be obtained easily.

In the present embodiment, the parameter value acquisition portion 23 obtains the parameter value q. The brightness value raising portion 24 raises the frequency values Ni of brightness levels of the brightness histogram to an exponential power of the parameter value q. The tone curve generating portion 25 generates a tone curve, based on the frequency values Ni' of brightness levels raised to an exponential power of the parameter value q. The image correcting portion 26 corrects the image data using the tone curve, thus giving rise to output image data. Since the parameter value q operates as a parameter that controls the degree of application of histogram equalization in this way, the degree of application of histogram equalization can be controlled.

In addition, in the present embodiment, the index to which the frequency values Ni of brightness levels are raised exponentially is used as a parameter value as described previously. Therefore, it is possible to make constant the degree of variation of the output image perceived by the user in response to a given amount of variation of the parameter value q. Consequently, the parameter value q for obtaining a desired image can be set easily. A desired image can be derived readily.

In the present embodiment, the degree of application of histogram equalization can be controlled by the single parameter value q. Furthermore, in the present embodiment, the degree of application of histogram equalization can be varied continuously (smoothly) by setting the parameter value q.

In the present embodiment, the tone curve generating portion 25 creates a tone curve by accumulating the frequency values Ni' of brightness levels raised by an exponential power of parameter value q to create a cumulative curve, making a minimum value of the cumulative curve correspond to a minimum value of brightness, and making a maximum value of the cumulative curve correspond to a maximum value of brightness. In consequence, the degree of application of histogram equalization can be controlled.

In the present embodiment, the input image is a scanned electron image taken by a scanning electron microscope. In this scanned electron image, the edges of the sample S may be overemphasized due to the edge effect. An edge effect is a phenomenon in which, if a minute protrusion or a step-like structure is present on the surface of a sample, the front end of the protrusion or an edge portion manifests itself brightly over some width. In the present embodiment, the degree of application of histogram equalization can be controlled and, therefore, a good image of the sample S whose shape can be checked easily can be obtained while lessening the influence of the edge effect.

It is to be noted that the present invention is not restricted to the above-described embodiment and that various changes and modifications are possible within the scope of the invention.

For example, in the description of the above embodiment, the imager associated with the present invention is a scanning electron microscope (SEM). The imager associated with the invention is not restricted to this instrument. The imager may also be other electron microscope such as a transmission electron microscope (TEM) or a scanning transmission electron microscope (STEM). Furthermore, the imager associated with the present invention may also be a digital camera. In addition, the imager associated with the invention may be a medical instrument such as MRI equipment, CT equipment, or X-ray equipment.

Additionally, in the description of the above embodiment, the imager takes gray scale black and white images. The imager associated with the present invention may also be an imager that takes color images such as a digital camera. In this case, the present invention may be applied to brightness components in the color space after image data from the image pickup portion of the imager is converted into a YCbCr color space or an HLS color space.

Further, in the above embodiment, the image processor 10A corrects images taken by the image pickup portion 10B. Alternatively, images taken by other imager may be received by the image processor 10A as input images via a storage medium such as an optical disc (CD or DVD), magnetic disc, hard disc, or memory (such as a flash memory), and the image processor 10A may image-process the input images.

In addition, in the description of the above embodiment, the single parameter value q is set. Alternatively, plural parameter values q may be set. In this case, the image processor 20 performs the image correcting subroutine illustrated in FIG. 8 for each set value of the parameter q. As a result, it is possible to obtain plural images which are different in degree of application of histogram equalization as shown in FIG. 9. The processing portion 20 displays these images on the display portion 30. Consequently, the user can select a desired image from the plural images which are different in degree of application of histogram equalization and which are displayed on the display portion 30.

The present invention embraces configurations substantially identical (e.g., in function, method, and results or in purpose and advantageous effects) with the configurations described in the preferred embodiment of the invention. Furthermore, the invention embraces the configurations described in the embodiment including portions which have non-essential portions replaced. Further, the invention embraces configurations which are the same as the configurations described in the preferred embodiment and to which well-known techniques have been added.

## Claims

1. A method of image processing, comprising the steps of:
creating a brightness histogram representing frequency values of brightness levels of image data having brightness information;
obtaining a parameter value;
raising the frequency values of the brightness levels of the brightness histogram to an exponential power of the parameter value;
creating a tone curve, based on the exponentially raised frequency values; and
correcting the image data using the tone curve, thus producing output image data.

2. A method of image processing as set forth in claim 1, wherein said parameter value is between 0 and 1, inclusively.

3. A method of image processing as set forth in any one of claims 1 and 2, wherein during said step of creating a tone curve, said frequency values raised to the exponential power of the parameter value are accumulated to create a cumulative curve, a minimum value of the cumulative curve is made to correspond to a minimum value of brightness, and a maximum value of the cumulative curve is made to correspond to a maximum value of brightness to thereby create the tone curve.

4. An image processor comprising:
a brightness histogram generating portion for creating a brightness histogram representing frequency values of brightness levels of image data having brightness information;
a parameter value acquisition portion for obtaining a parameter value;
a frequency value raising portion for raising the frequency values of the brightness levels of the brightness histogram to an exponential power of the parameter value;
a tone curve generating portion for generating a tone curve, based on the exponentially raised frequency values; and
an image correction portion for correcting the image data using the tone curve to thereby produce output image data.

5. An image processor as set forth in claim 4, wherein said parameter value is between 0 and 1, inclusively.

6. An image processor as set forth in any one of claims 4 and 5, wherein said tone curve generating portion generates said tone curve by accumulating the frequency values raised to the exponential power of the parameter value to create a cumulative curve, making a minimum value of the cumulative curve correspond to a minimum value of brightness, and making a maximum value of the cumulative curve correspond to a maximum value of brightness.

7. An imager comprising:
an image pickup portion for imaging an object of interest to obtain image data;
a brightness histogram generating portion for creating a brightness histogram representing frequency values of brightness levels of the image data;
a parameter value acquisition portion for obtaining a parameter value;
a frequency value raising portion for raising the frequency values of the brightness levels of the brightness histogram to an exponential power of the parameter value;
a tone curve generating portion for generating a tone curve, based on the exponentially raised frequency values; and
an image correction portion for correcting the image data using the tone curve to thereby produce output image data.

8. An imager as set forth in claim 7, wherein said parameter value is between 0 and 1, inclusively.

9. An imager as set forth in any one of claims 7 and 8, wherein said tone curve generating portion generates said tone curve by accumulating the frequency values raised to the exponential power of the parameter value to create a cumulative curve, making a minimum value of the cumulative curve correspond to a minimum value of brightness, and making a maximum value of the cumulative curve correspond to a maximum value of brightness.

10. A computer program for instructing a computer to operate as:
a brightness histogram generating portion for creating a brightness histogram representing frequency values of brightness levels of image data having brightness information;
a parameter value acquisition portion for obtaining a parameter value;
a frequency value raising portion for raising the frequency values of the brightness levels of the brightness histogram to an exponential power of the parameter value;
a tone curve generating portion for generating a tone curve, based on the exponentially raised frequency values; and
an image correction portion for correcting the image data using the tone curve to thereby produce output image data.

11. A computer program as set forth in claim 10, wherein said parameter value is between 0 and 1, inclusively.

12. A computer program as set forth in any one of claims 10 and 11, wherein said tone curve generating portion generates said tone curve by accumulating the frequency values raised to the exponential power of the parameter value to create a cumulative curve, making a minimum value of the cumulative curve correspond to a minimum value of brightness, and making a maximum value of the cumulative curve correspond to a maximum value of brightness.
